# EUROPÄISCHE PATENTANMELDUNG

(11) **EP 3 173 735 A1**
(43) Veröffentlichungstag der Anmeldung: **31.05.2017**
(21) Anmeldenummer: 15197021.7
(22) Anmeldetag: 30.11.2015
(51) Int. Cl.: G01C 9/26, G01C 15/00, G01K 15/00

(54) **VERFAHREN ZUM MESSEN EINER BETRIEBSTEMPERATUR EINER APPARATUR**

(71) Anmelder: HILTI Aktiengesellschaft, 9494 Schaan (LI)
(72) Erfinder: Lukic, Sasha, 9470 Buchs (CH)
(74) Vertreter: Hilti Aktiengesellschaft Corporate Intellectual Property

(57) **Zusammenfassung**

Verfahren zum Messen einer Betriebstemperatur einer Apparatur, die mittels einer Nivelliereinrichtung in einen definierten Zustand ausrichtbar ist, wobei die Nivelliereinrichtung mindestens einen Neigungssensor mit einem Gehäuse, das mit einer Gasblase und einer Flüssigkeit gefüllt ist, einer Lichtquelle und einem Fotodetektor umfasst. Das Verfahren umfasst die Schritte: Speichern einer Kennlinie von Blasenlängen (L) der Gasblase und Temperaturen (T) in einer Kontrolleinrichtung der Apparatur, Messen der Blasenlänge (L) der Gasblase und Ermitteln der zugehörigen Temperatur (T) zur gemessenen Blasenlänge (L) der Gasblase anhand der Kennlinie.

## Beschreibung

### Technisches Gebiet

Die vorliegende Erfindung betrifft ein Verfahren zum Messen einer Betriebstemperatur einer Apparatur, die mittels einer Nivelliereinrichtung in einen definierten Zustand ausrichtbar ist, gemäß dem Oberbegriff des Anspruchs 1 sowie eine Apparatur gemäß dem Oberbegriff des Anspruchs 3.

### Stand der Technik

Die Genauigkeit von Apparaturen, wie Rotationslasern, wird durch die Umgebungsbedingungen, wie die Lagerungstemperatur oder die Betriebstemperatur der Apparatur, durch eine äußere Krafteinwirkung auf die Apparatur bei Stürzen oder starken Stößen und durch Alterungsprozesse der Gerätekomponenten der Apparatur beeinflusst. Die Alterung der Gerätekomponenten erfolgt auf einer langen Zeitskala und verändert die Genauigkeit einer Apparatur sehr langsam. Die äußere Krafteinwirkung auf eine Apparatur durch einen Sturz oder einen starken Stoß ist ein Ereignis, das für den Bediener unvorhersehbar ist und das von daher nur schwer berücksichtigt werden kann. Im Unterschied dazu ist die Betriebstemperatur einer Apparatur eine Größe, die die Genauigkeit der Apparatur immer beeinflusst. Bei jedem Einsatz bzw. Betrieb der Apparatur herrschen Umgebungsbedingungen vor, die die Genauigkeit der Apparatur beeinflussen.

Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Die Gerätehersteller von Rotationslasern definieren in ihren Bedienungsanleitungen für die Betriebstemperatur des Rotationslasers einen Temperaturbereich, in dem der Rotationslaser betrieben werden darf. Der Betrieb von Rotationslasern ist typischerweise in einem Temperaturbereich von -20 °C bis +50 °C zugelassen. Die Justierung eines Rotationslasers und die Kalibrierung der Geräteachsen werden vom Gerätehersteller unter festgelegten Umgebungsbedingungen durchgeführt; die Kalibrierung der Geräteachsen erfolgt typischerweise bei Normaltemperatur von +20 °C. Um die Genauigkeit eines Rotationslasers im Betrieb zu gewährleisten, muss die Genauigkeit regelmäßig vom Bediener überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft.

Bekannt sind Verfahren zum Überprüfen und/oder zum Kalibrieren einer Horizontalachse, die bei allen horizontal einsetzbaren Rotationslasern angewandt werden, und Verfahren zum Überprüfen und/oder zum Kalibrieren einer Vertikalachse, die ausschließlich bei vertikal einsetzbaren Rotationslasern angewandt werden. In einem ersten Verfahren wird die erste Horizontalachse überprüft und in einem zweiten Verfahren die zweite Horizontalachse, wobei die Reihenfolge, in der das erste und zweite Verfahren durchgeführt werden, beliebig ist. Bei horizontal und vertikal einsetzbaren Rotationslasern erfolgt im Anschluss an die Überprüfung der ersten und zweiten Horizontalachse eine Überprüfung der Vertikalachse in einem dritten Verfahren.

Die Ausrichtung der Geräteachsen in einen definierten Zustand erfolgt mittels einer Nivelliereinrichtung, die in einem Gerätegehäuse des Rotationslasers angeordnet ist. Der definierte Zustand der Geräteachsen kann ein horizontaler Zustand oder ein vertikaler Zustand sein. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und bei einem vertikal einsetzbaren Rotationslaser eine dritte Nivelliereinheit, die die Vertikalachse in einen dritten definierten Zustand ausrichtet. Die Nivelliereinheiten umfassen jeweils einen Neigungssensor, der die Neigung der Geräteachse misst, und ein Verstellelement, mit dem die Neigung der Geräteachse verstellbar ist. Im Idealfall sind die Neigungssensoren parallel zu den zugeordneten Geräteachsen ausgerichtet. Ist ein Neigungssensor nicht parallel zur zugeordneten Geräteachse ausgerichtet, weist die Geräteachse einen Neigungsfehler auf.

Zum horizontalen oder vertikalen Ausrichten von Apparaturen wie Rotationslasern werden üblicherweise Libellen als Neigungssensoren eingesetzt. Ein als Libelle ausgebildeter Neigungssensor umfasst ein Gehäuse, das mit einer Flüssigkeit und einer Gasblase gefüllt ist, eine Lichtquelle und einen oder mehrere Fotodetektoren. Das Gehäuse ist durch eine konvex gewölbte Deckschicht abgeschlossen und die Gasblase bewegt sich an der Deckschicht entlang, wenn der Neigungssensor gegenüber einer horizontalen oder vertikalen Bezugsebene geneigt wird. Die Lichtquelle emittiert vorzugsweise divergentes Licht (beispielsweise LED) und ist mit einer optischen Achse des Neigungssensors zentriert, welche gleichzeitig die Symmetrieachse der Libelle bildet. Die Gasblase in der abgeschlossenen Flüssigkeit zeigt die Ausrichtung der Libelle an. Die Gasblase befindet sich stets am höchsten Punkt der Flüssigkeit. Die Libelle wird so mit der Apparatur verbunden, dass sich die Gasblase im definierten Zustand der Apparatur an einer bestimmten Stelle der Libelle befindet. Der definierte Zustand der Apparatur kann mit Hilfe der Libelle mit geringem Aufwand hergestellt oder wiederhergestellt werden. Bei dem definierten Zustand muss es sich nicht zwangsläufig um einen horizontal oder vertikal ausgerichteten Zustand der Apparatur handeln. Prinzipiell kann auch durch eine geneigte Anordnung der Libelle an der Apparatur jeder beliebige Neigungswinkel für den definierten Zustand vorgegeben werden.

Bekannte Rotationslaser, wie der Rotationslaser Laser Beacon LB-400, weisen einen Temperatursensor auf, der die Temperatur im Inneren des Gerätegehäuses des Rotationslasers misst. Wenn die gemessene Temperatur den oberen Grenzwert des zulässigen Temperaturbereichs im Betrieb überschreitet, wird der Betrieb des Rotationslasers durch Abschalten der Motoren und der Strahlquelle unterbrochen. Sobald die gemessene Temperatur unter den oberen Grenzwert fällt, kann der Betrieb des Rotationslasers fortgesetzt werden. Der Temperatursensor stellt sicher, dass die Motoren und die Strahlquelle nur innerhalb des zulässigen Temperaturbereichs betrieben werden und schützt diese Gerätekomponenten vor Beschädigung durch erhöhte Temperaturen. Die Temperatur des Rotationslasers wird beim Kalibrieren der Geräteachsen des Rotationslasers nicht berücksichtigt.

Aus DE 10 2013 217 479 A1 ist ein Rotationslaser bekannt, bei dem der Einfluss der Temperatur, der Einfluss von Beschleunigungen oder Kräften, die auf den Rotationslaser einwirken, und die Alterung der Gerätekomponenten des Rotationslasers berücksichtigt werden. Der Rotationslaser umfasst eine Überwachungseinheit und eine Sensoreinheit mit einem Temperatursensor, einem Beschleunigungssensor und einem Echtzeitsensor. Der Temperatursensor misst eine Lagerungs- oder Betriebstemperatur des Rotationslasers, der Beschleunigungssensor misst auftretende Kräfte und Beschleunigungen durch Stürze oder starke Stöße und der Echtzeitsensor misst die Zeitdauer seit der letzten ordnungsgemäßen Kalibrierung des Rotationslasers. Die Messwerte der Sensoren werden mit Hilfe der Überwachungseinheit in regelmäßigen Abständen aufgezeichnet und an eine Steuer- und Auswerteeinrichtung weitergeleitet. Für jede Messgröße sind Grenzwerte definiert und die Messwerte der Sensoren werden mit den Grenzwerten verglichen. Wenn ein Messwert außerhalb des Grenzwertes liegt, wird mit Hilfe der Überwachungseinheit ein Warnhinweis für den Bediener erzeugt. Der Warnhinweis wird optisch oder akustisch angezeigt und enthält eine Aufforderung für den Bediener, den Rotationslaser zu kalibrieren. Für die Messgröße "Temperatur" ist ein Grenzintervall mit einem unteren Grenzwert und einem oberen Grenzwert definiert, wobei der untere Grenzwert der minimalen Temperatur und der obere Grenzwert der maximalen Temperatur des zulässigen Temperaturbereichs entspricht. Für die Messgrößen "Beschleunigung" und "Zeitdauer" sind obere Grenzwerte definiert.

DE 10 2013 217 479 A1 macht keine Angaben über die Art des Temperatursensors und die räumliche Anordnung des Temperatursensors im Gerätegehäuse des Rotationslasers. Bei Rotationslasern, die im Außenbereich eingesetzt werden, können durch Sonneneinstrahlung innerhalb des Rotationslasers Temperaturunterschiede auftreten. Dabei können sich die Temperaturen in Bereichen des Rotationslasers mit direkter Sonneneinstrahlung um mehrere Grad Celsius von Temperaturen in abgeschatteten Bereichen unterscheiden und die gemessene Temperatur ist von der räumlichen Anordnung des Temperatursensors im Gerätegehäuse des Rotationslasers abhängig.

### Darstellung der Erfindung

Die Aufgabe der vorliegenden Erfindung besteht in der Entwicklung eines Verfahrens zum Messen einer Betriebstemperatur einer Apparatur, die mittels einer Nivelliereinrichtung in einen definierten Zustand ausrichtbar ist, wobei der apparative Aufwand für die Temperaturmessung reduziert ist. Außerdem soll die Temperatur an verschiedenen Orten im Gerätegehäuse der Apparatur gemessen werden können.

Diese Aufgabe wird bei dem eingangs genannten Verfahren zum Messen einer Betriebstemperatur einer Apparatur erfindungsgemäß durch die Merkmale des unabhängigen Anspruchs 1 und bei der eingangs genannten Apparatur durch die Merkmale des unabhängigen Anspruchs 3 gelöst. Vorteilhafte Weiterbildungen sind in den abhängigen Ansprüchen angegeben.

Erfindungsgemäß weist das Verfahren zum Messen einer Betriebstemperatur einer Apparatur, die mittels einer Nivelliereinrichtung in einen definierten Zustand ausrichtbar ist, wobei die Nivelliereinrichtung mindestens einen Neigungssensor mit einem Gehäuse, das mit einer Flüssigkeit und einer Gasblase gefüllt ist, einer Lichtquelle und einem Fotodetektor umfasst, die Schritte auf:
▪ Speichern einer Kennlinie von Temperaturen der Apparatur und Blasenlängen der Gasblase in einer Kontrolleinrichtung der Apparatur,
▪ Messen der Blasenlänge der Gasblase und
▪ Ermitteln der zugehörigen Temperatur zur gemessenen Blasenlänge der Gasblase anhand der Kennlinie.

Das erfindungsgemäße Verfahren zum Messen einer Betriebstemperatur einer Apparatur hat den Vorteil, dass die Temperaturmessung mit Hilfe eines Neigungssensors erfolgt und der apparative Aufwand für die Temperaturmessung reduziert ist. Apparaturen, die in einen definierten Zustand ausrichtbar sind, weisen üblicherweise eine Nivelliereinrichtung mit mindestens einem Neigungssensor auf. Der definierte Zustand, in den die Apparatur mit Hilfe der Nivelliereinrichtung ausgerichtet wird, kann ein horizontaler Zustand, ein vertikaler Zustand oder ein geneigter Zustand sein. Der Neigungssensor umfasst ein Gehäuse, das mit einer Gasblase und einer Flüssigkeit gefüllt ist, eine Lichtquelle und einen Fotodetektor. Die Gasblase des Neigungssensors weist eine Blasenlänge auf. Das erfindungsgemäße Verfahren beruht darauf, dass sich die Blasenlänge der Gasblase abhängig von der Temperatur verändert und diese Abhängigkeit bekannt ist oder ermittelt wird. Die Kennlinie stellt die Abhängigkeit der Temperatur von der Blasenlänge dar und wird in der Kontrolleinrichtung der Apparatur gespeichert. Wenn im Betrieb der Apparatur die aktuelle Betriebstemperatur bestimmt werden soll, wird die Blasenlänge der Gasblase gemessen und die zugehörige Temperatur anhand der Kennlinie ermittelt. Die Messung der Betriebstemperatur mittels des Neigungssensors ist dann besonders vorteilhaft, wenn die Betriebstemperatur zur Ausrichtung der Geräteachsen in einen definierten Zustand genutzt wird. In diesem Fall wird die Betriebstemperatur genau an dem Ort im Gerätegehäuse der Apparatur gemessen, der für die Ausrichtung der Geräteachse relevant ist.

Bevorzugt wird die Blasenlänge der Gasblase mittels der Lichtquelle und des Fotodetektors des Neigungssensors gemessen. Wird die Blasenlänge mit Hilfe der Lichtquelle und des Fotodetektors des Neigungssensors gemessen, ist kein weiteres Sensorelement für die Temperaturmessung erforderlich und der apparative Aufwand für die Temperaturmessung ist gering. Die Temperaturmessung mittels des Neigungssensors ist dann besonders vorteilhaft, wenn die Betriebstemperatur zur Ausrichtung der Geräteachsen in einen definierten Zustand genutzt wird, da die Betriebstemperatur genau an dem Ort im Gerätegehäuse der Apparatur gemessen wird, der für die Ausrichtung der Geräteachse relevant ist.

Erfindungsgemäß ist die Apparatur mit mindestens einer Geräteachse, die in einen definierten Zustand ausrichtbar ist, dadurch gekennzeichnet, dass in der Kontrolleinrichtung eine Kennlinie vorgesehen ist, die die Betriebstemperatur der Apparatur in Abhängigkeit von einer Blasenlänge der Gasblase des Neigungssensors darstellt. Die erfindungsgemäße Apparatur weist mindestens eine Geräteachse auf, die mittels eines Neigungssensors in einen definierten Zustand ausrichtbar ist. Der definierte Zustand kann ein horizontaler Zustand, ein vertikaler Zustand oder ein geneigter Zustand sein. Wenn die Apparatur mehrere Geräteachsen aufweist, ist für jede Geräteachse ein Neigungssensor vorgesehen, der mit der Geräteachse verbunden ist und die Ausrichtung der Geräteachse zum definierten Zustand misst. Die erfindungsgemäße Apparatur weist eine Kontrolleinrichtung auf, in der eine Kennlinie gespeichert ist, wobei die Kennlinie die Abhängigkeit der Betriebstemperatur der Apparatur von der Blasenlänge der Gasblase des Neigungssensors darstellt. Wenn im Betrieb der Apparatur die aktuelle Betriebstemperatur bestimmt werden soll, wird die Blasenlänge der Gasblase gemessen und die zugehörige Betriebstemperatur anhand der Kennlinie ermittelt.

In einer bevorzugten Ausführungsform weist die Apparatur eine erste und zweite Geräteachse auf, wobei die erste Geräteachse mittels eines ersten Neigungssensors in einen ersten definierten Zustand und die zweite Geräteachse mittels eines zweiten Neigungssensors in einen zweiten definierten Zustand ausrichtbar sind, und in der Kontrolleinrichtung der Apparatur sind eine erste und zweite Kennlinie vorgesehen, wobei die erste Kennlinie eine erste Betriebstemperatur der Apparatur in Abhängigkeit von einer ersten Blasenlänge einer ersten Gasblase des ersten Neigungssensors darstellt und die zweite Kennlinie eine zweite Betriebstemperatur der Apparatur in Abhängigkeit von einer zweiten Blasenlänge einer zweiten Gasblase des zweiten Neigungssensors darstellt.

Die erfindungsgemäße Apparatur hat den Vorteil, dass die Betriebstemperatur der Apparatur an verschiedenen Orten im Gerätegehäuse gemessen werden kann und dadurch die Genauigkeit bei der Temperaturmessung erhöht wird. Die Apparatur weist eine erste und zweite Geräteachse auf, die mit Hilfe eines ersten und zweiten Neigungssensors in einen definierten Zustand ausrichtbar sind. Der erste Neigungssensor misst eine erste Temperatur und der zweite Neigungssensor misst eine zweite Temperatur. Die Temperaturmessung mittels des ersten und zweiten Neigungssensors ist dann besonders vorteilhaft, wenn die Betriebstemperatur zur Ausrichtung der Geräteachsen in einen definierten Zustand genutzt wird, da die Betriebstemperatur genau an dem Ort im Gerätegehäuse der Apparatur gemessen wird, der für die Ausrichtung der Geräteachse relevant ist. Der erste Neigungssensor misst die erste Temperatur und den ersten Neigungswinkel der ersten Geräteachse und der zweite Neigungssensor misst die zweite Temperatur den zweiten Neigungswinkel der zweiten Geräteachse.

Besonders bevorzugt weist die Apparatur eine dritte Geräteachse auf, wobei die dritte Geräteachse mittels eines dritten Neigungssensors in einen dritten definierten Zustand ausrichtbar ist, und in der Kontrolleinrichtung der Apparatur ist eine dritte Kennlinie vorgesehen, wobei die dritte Kennlinie eine dritte Betriebstemperatur der Apparatur in Abhängigkeit von einer dritten Blasenlänge einer dritten Gasblase des dritten Neigungssensors darstellt. Die Apparatur weist eine dritte Geräteachse auf, die mit Hilfe eines dritten Neigungssensors in einen definierten Zustand ausrichtbar ist, wobei der dritte Neigungssensor eine dritte Temperatur misst. Jeder Neigungssensor der Apparatur eignet sich zur Temperaturmessung und kann die Genauigkeit bei Temperaturmessung erhöhen. Der Vorteil der erfindungsgemäßen Apparatur besteht darin, dass in der Kontrolleinrichtung für jede Geräteachse der Apparatur eine eigene Kennlinie gespeichert ist, die die Abhängigkeit der Betriebstemperatur von der Blasenlänge der Gasblase darstellt.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Apparatur, die als horizontal und vertikal ausrichtbarer Rotationslaser mit drei Geräteachsen ausgebildet ist, wobei die Geräteachsen eine erste Horizontalachse, eine zweite Horizontalachse und eine Vertikalachse umfassen;
- FIGN. 2A, B: die wesentlichen Komponenten des Rotationslasers der FIG. 1, die eine Nivelliereinrichtung mit einer ersten Nivelliereinheit zur Ausrichtung der ersten Horizontalachse, einer zweiten Nivelliereinheit zur Ausrichtung der zweiten Horizontalachse und einer dritten Nivelliereinheit zur Ausrichtung der Vertikalachse umfassen;
- FIG. 3: den Aufbau eines Neigungssensors für die Nivelliereinheiten des Rotationslasers mit einem Gehäuse, das mit einer Flüssigkeit und einer Gasblase gefüllt ist, einer Lichtquelle und einem Fotodetektor; und
- FIG. 4: eine Kennlinie von Temperaturen und Blasenlängen der Gasblase des Neigungssensors der FIG. 3.

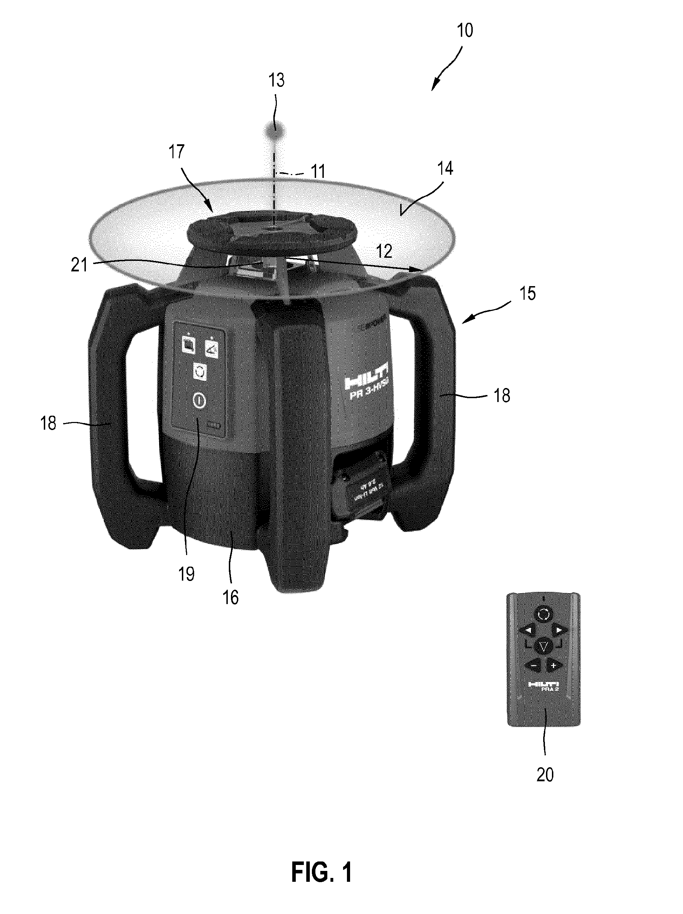

**FIG. 1** zeigt eine erfindungsgemäße Apparatur **10**, die als horizontal und vertikal ausrichtbarer Rotationslaser ausgebildet ist. Der Rotationslaser 10 erzeugt einen um eine Rotationsachse **11** rotierenden ersten Laserstrahl **12** und einen ruhenden zweiten Laserstrahl **13**. Der rotierende erste Laserstrahl 12 erzeugt eine Laserebene **14**, die senkrecht zur Rotationsachse 11 angeordnet ist, und der zweite Laserstrahl 13 verläuft senkrecht zur Laserebene 14 des ersten Laserstrahls 12.

Der Rotationslaser 10 umfasst ein Gerätegehäuse **15** und eine im Gerätegehäuse 15 angeordnete Messeinrichtung. Das Gerätegehäuse 15 besteht aus einem Grundgehäuse **16**, einem Rotationskopf **17** und mehreren Handgriffen **18**. Die Bedienung des Rotationslasers 10 erfolgt über eine Bedienungseinrichtung **19**, die in das Grundgehäuse 16 integriert ist und von außen bedienbar ist. Neben der in das Grundgehäuse 16 integrierten Bedienungseinrichtung 19 kann eine Fernbedienung **20** vorgesehen sein, die über eine Kommunikationsverbindung mit dem Rotationslaser 10 verbindbar ist.

Die Messeinrichtung des Rotationslasers 10 erzeugt im Inneren des Grundgehäuses 15 einen Laserstrahl, der auf eine um die Rotationsachse 11 rotierende Umlenkoptik **21** trifft. Ein erster Teil des Laserstrahls wird von der Umlenkoptik 21 um 90° umgelenkt und bildet den ersten Laserstrahl 12 des Rotationslasers 10. Ein zweiter Teil des Laserstrahls tritt durch die Umlenkoptik 21 hindurch und bildet den zweiten Laserstrahl 13 des Rotationslasers 10. Abhängig von der Rotationsgeschwindigkeit, mit der der erste Laserstrahl 12 um die Rotationsachse 11 rotiert wird, werden ein Rotationsmodus, ein Linienmodus und ein Punktmodus des Rotationslasers 10 unterschieden.

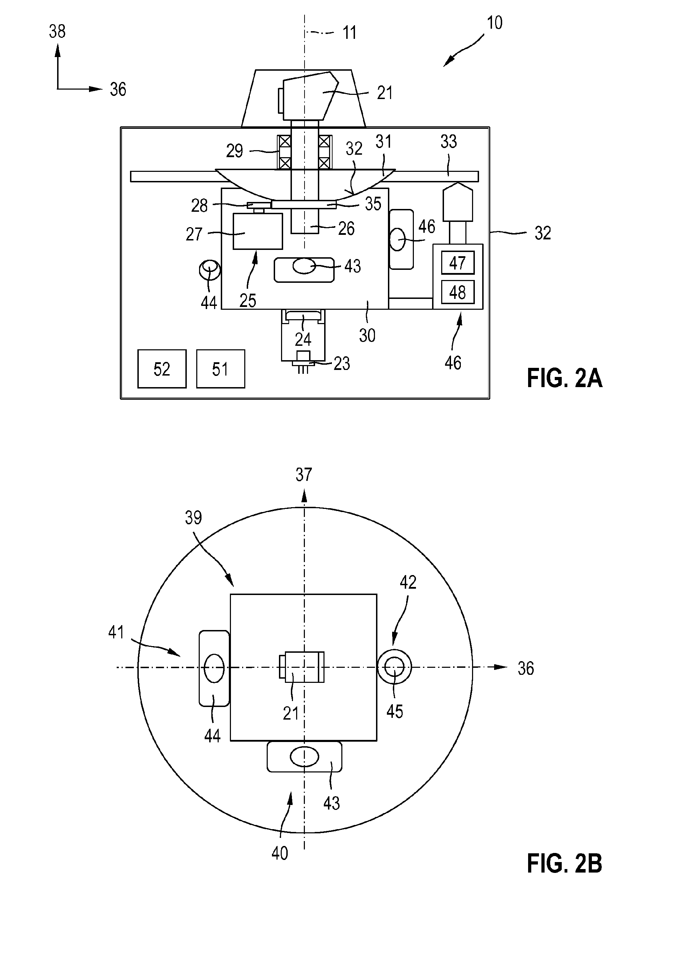

**FIGN. 2A****, B** zeigen die wesentlichen Komponenten des Rotationslasers 10 der FIG. 1 in einer schematischen Darstellung, wobei FIG. 2A die Komponenten in einer Vertikalebene parallel zur Rotationsachse 11 und FIG. 2B die Komponenten in einer Horizontalebene senkrecht zur Rotationsachse 11 darstellt.

Der Rotationslaser 10 umfasst eine Lasereinrichtung mit einer Strahlquelle **23**, die einen Laserstrahl erzeugt, und einer Kollimationsoptik **24**. Die Strahlquelle 23 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 23 wird der Laserstrahl mit Hilfe der Kollimationsoptik 24 kollimiert. Alternativ kann die Kollimationsoptik in die Strahlquelle integriert sein oder bei einer Strahlquelle 23 mit einer hohen Strahlqualität und geringen Divergenz kann die Kollimationsoptik entfallen.

Der kollimierte Laserstrahl trifft auf die Umlenkoptik 21, die den ersten und zweiten Laserstrahl 12, 13 trennt. Die Umlenkoptik 21 ist mit einer Dreheinrichtung **25** verbunden, die die Umlenkoptik 21 um die Rotationsachse 11 bewegt. Die Dreheinrichtung 25 umfasst eine drehbare Welle **26**, eine Motoreinheit **27** und eine Übertragungseinrichtung **28**, die beispielsweise in Form eines Zahnriemens ausgebildet ist und die Bewegung der Motoreinheit 27 auf die Welle 26 überträgt. Die Umlenkoptik 21 ist mit der drehbaren Welle 26 gekoppelt und um die Rotationsachse 11 drehbar ausgebildet. Die Welle 26 ist in einem Drehlager **29** eines Statorteils **30** gelagert, das mit einer Kugelkalotte **31** verbunden ist. Die Kugelkalotte 31 ist in einer Kugelkalottenlagerung **32** in einem gehäusefesten Montagerahmen **33** um zwei zur Rotationsebene (Ebene senkrecht zur Rotationsachse 11) senkrechte Schwenkebenen neigbar gelagert. Der Rotationslaser 10 umfasst eine Messeinrichtung **35**, die den Drehwinkel der Welle 26 während der Rotation um die Rotationsachse 11 misst. Die Messeinrichtung 35 ist beispielsweise als Winkelencoder ausgebildet und besteht aus einer Maßscheibe, die mit der Welle 26 drehfest verbunden ist, einer Abtasteinrichtung, mit der die Maßscheibe abgetastet wird, und einem Auswerte- und Steuerelement.

Der Rotationslaser 10 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 10 weist als Geräteachsen eine erste Horizontalachse **36** und eine zweite Horizontalachse **37** auf, die senkrecht zueinander verlaufen und eine Geräteebene aufspannen. Die erste und zweite Horizontalachse 36, 37 werden am Rotationskopf 17 des Rotationslasers 10 über Anzeigeelemente angezeigt. Der horizontal und vertikal einsetzbare Rotationslaser 10 weist neben der ersten und zweiten Horizontalachse 36, 37 eine weitere Geräteachse auf, die als Vertikalachse **38** bezeichnet wird und im Idealfall senkrecht zur Geräteebene der ersten und zweiten Horizontalachse 36, 37 ausgerichtet ist.

Der Rotationslaser 10 ist als selbstnivellierender Rotationslaser ausgebildet, der sich automatisch nivelliert, wenn das Gerätegehäuse 15 des Rotationslasers 10 innerhalb eines Selbstnivellierbereiches aufgestellt wird. Der Selbstnivellierbereich von Rotationslasern liegt typischerweise bei 5°. Der Rotationslaser 10 umfasst eine Nivelliereinrichtung, die die Geräteachsen des Rotationslasers 10 unabhängig von einer Ausrichtung des Gerätegehäuses 15 in einen definierten Zustand ausrichtet. Die Nivelliereinrichtung umfasst eine erste Nivelliereinheit **40**, die die erste Horizontalachse 36 in einen ersten definierten Zustand ausrichtet, eine zweite Nivelliereinheit **41**, die die zweite Horizontalachse 37 in einen zweiten definierten Zustand ausrichtet, und eine dritte Nivelliereinheit **42**, die die Vertikalachse 38 in einen dritten definierten Zustand ausrichtet.

Die erste Nivelliereinheit 40 umfasst einen ersten Neigungssensor **43** und ein erstes Verstellelement, die zweite Nivelliereinheit 41 umfasst einen zweiten Neigungssensor **44** und ein zweites Verstellelement und die dritte Nivelliereinheit 42 umfasst einen dritten Neigungssensor **45** und ein drittes Verstellelement. Die Verstellelemente der Nivelliereinheiten 40, 41, 42 sind in eine Neigungseinrichtung **46** integriert, die einen ersten Verstellmotor **47** und einen zweiten Verstellmotor **48** aufweist. Der erste Verstellmotor 47 neigt den Montagerahmen 33 um eine erste Schwenkachse, die mit der zweiten Horizontalachse 37 zusammenfällt, und der zweite Verstellmotor 48 neigt den Montagerahmen 33 um eine zweite Schwenkachse, die mit der ersten Horizontalachse 36 zusammenfällt. Der erste Verstellmotor 47 bildet das erste Verstellelement der ersten Nivelliereinheit 40 und der zweite Verstellmotor 48 bildet das zweite Verstellelement der zweiten Nivelliereinheit 41. Da die Vertikalachse 38 senkrecht zur Horizontalebene der ersten und zweiten Horizontalachse 36, 37 ausgerichtet ist, kann die Ausrichtung der Vertikalachse 38 mittels des ersten und zweiten Verstellmotors 47, 48 eingestellt werden. Der erste und zweite Verstellmotor 47, 48 bilden gemeinsam das dritte Verstellelement der dritten Nivelliereinheit 42.

Die horizontale Ausrichtung der Laserebene bzw. der Gerätebene stellt einen bevorzugten definierten Zustand dar, in den ein Rotationslaser 10 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 10 in Vertikallage ausgerichtet werden soll, wobei die vertikal ausgerichtete Geräteebene auch als Vertikalebene bezeichnet wird. Die Laserebene, die der rotierende erste Laserstrahl 12 erzeugt, kann mittels der Neigungseinrichtung 46 gegenüber der Horizontalebene oder der Vertikalebene des Rotationslasers 10 geneigt werden. Der Rotationslaser 10 kann die Laserebene des rotierenden ersten Laserstrahls 12 in einer Neigungsrichtung oder in zwei Neigungsrichtungen neigen. Die Neigung der Laserebene erfolgt im nivellierten Zustand des Rotationslasers 10. Der Rotationslaser 10 kann in Horizontallage oder in Vertikallage geneigt werden.

Die Steuerung und Auswertung des Rotationslasers 10 erfolgt über Kontrollelemente, die mit der Strahlquelle 23, der Dreheinrichtung 25, der Messeinrichtung 35, der Nivelliereinrichtung 40, 41, 42 und der Neigungseinrichtung 46 verbunden sind. Die Kontrollelemente sind in eine gemeinsame Kontrolleinrichtung **51**, die beispielsweise als Mikrocontroller ausgebildet ist, integriert oder können als getrennte Komponenten ausgebildet sein.

Da die Ausrichtung der Neigungssensoren 43, 44, 45, die die Geräteachsen 36, 37, 38 des Rotationslasers 10 in einen definierten Zustand ausrichten, temperaturabhängig ist und der Rotationslaser 11 in einem großen Temperaturbereich, beispielsweise zwischen - 20 °C und + 50 °C eingesetzt werden kann, ist es vorteilhaft, wenn in der Kontrolleinrichtung 51 des Rotationslasers 10 mehrere Nulllagen u gespeichert sind.

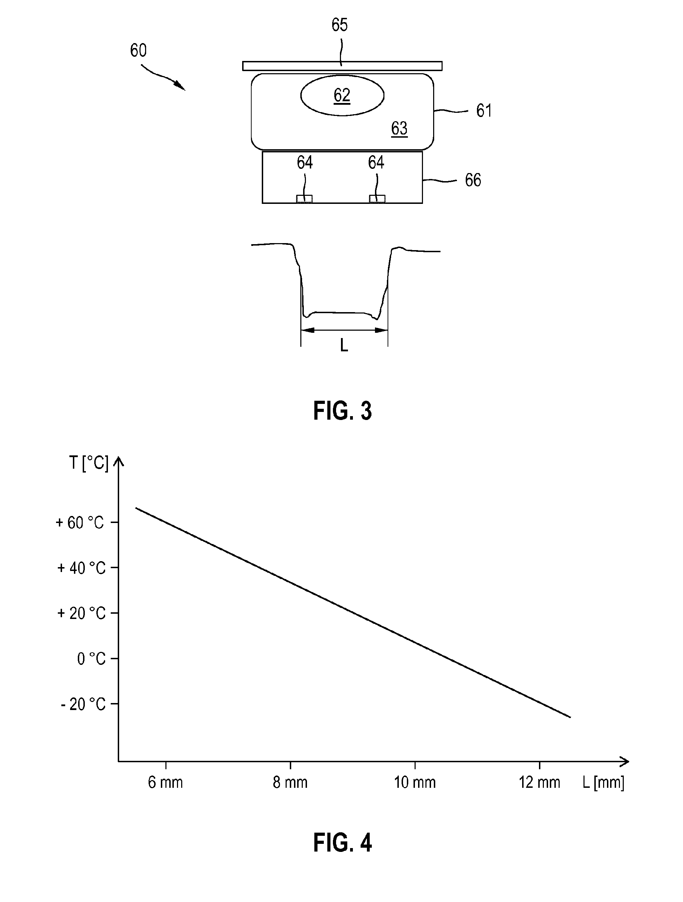

**FIG. 3** zeigt den Aufbau eines optischen Neigungssensors **60**, der im Aufbau den Neigungssensoren 43, 44, 45 für die Nivelliereinheiten 40, 41, 42 des Rotationslasers 10 entspricht. Der Neigungssensor 60 umfasst ein Gehäuse **61**, das mit einer Gasblase **62** und einer Flüssigkeit **63** gefüllt ist, eine Lichtquelle **64**, einen Fotodetektor **65** und einen Abstandhalter **66**.

Der Rotationslaser 10 weist drei Geräteachsen auf, die als erste Horizontalachse 36, zweite Horizontalachse 37 und Vertikalachse 38 ausgebildet sind. Die Nivelliereinrichtung 39 des Rotationslasers 10 umfasst für jede Geräteachse 37, 38, 39 eine Nivelliereinheit 40, 41, 42 mit einem Neigungssensor 43, 44, 45 und einem Verstellelement. Die Neigungssensoren 43, 44, 45 arbeiten unabhängig voneinander und können im Betrieb des Rotationslasers 10 unterschiedliche Temperaturen aufweisen. Die Temperatur des Rotationslasers 10 kann mittels der Neigungssensoren 43, 44, 45 gemessen werden. Die Temperatur des ersten Neigungssensors 43 wird als erste Temperatur **T₁**, die Temperatur des zweiten Neigungssensors 44 als zweite Temperatur **T₂** und die Temperatur des dritten Neigungssensors 45 als dritte Temperatur **T₃** bezeichnet.

Die Gasblase 62 des Neigungssensors 60 weist eine Blasenlänge **L** auf, die temperaturabhängig ist und sich daher als Messgröße für die Temperatur T des Neigungssensors 60 eignet. Die Blasenlänge L der Gasblase 62 kann mit Hilfe der Lichtquelle 64 und des Fotodetektors 65 gemessen werden. Zur Unterscheidung des ersten, zweiten und dritten Neigungssensors 43, 44, 45 werden die Komponenten der Neigungssensoren mit einem Index versehen, der durch einen Bindestrich vom Bezugszeichen abgetrennt ist. Der erste Neigungssensor 43 weist den Index "1", der zweite Neigungssensor 44 den Index "2" und der dritte Neigungssensor 45 den Index "3" auf. Die erste Temperatur T₁ des ersten Neigungssensors 43 wird über eine erste Blasenlänge **L₁** der ersten Gasblase 62-1 bestimmt, die zweite Temperatur T₂ des zweiten Neigungssensors 44 wird über eine zweite Blasenlänge **L₂** der zweiten Gasblase 62-2 bestimmt und die dritte Temperatur T₃ des dritten Neigungssensors 45 wird über eine dritte Blasenlänge **L₃** der dritten Gasblase 62-3 bestimmt.

Die Temperaturmessung mittels der Neigungssensoren 43, 44, 45 hat gegenüber einer Temperaturmessung mittels eines Temperatursensors im Gerätegehäuse des Rotationslasers 10 den Vorteil, dass die Temperatur T₁, T₂, T₃ genau an dem Ort im Gerätegehäuse 15 gemessen wird, der für die Ausrichtung der ersten Horizontalachse 36, der zweiten Horizontalachse 37 und der Vertikalachse 38 relevant ist. Der erste Neigungssensor 43 misst die erste Temperatur T₁ und den ersten Neigungswinkel der ersten Horizontalachse 36, der zweite Neigungssensor 44 misst die zweite Temperatur T₂ und den zweiten Neigungswinkel der zweiten Horizontalachse 37 und der dritte Neigungssensor 47 misst die dritte Temperatur T₃ und den dritten Neigungswinkel der Vertikalachse 38.

**FIG. 4** zeigt eine Kennlinie, die die Temperatur T abhängig von der Blasenlänge L der Gasblase 62 darstellt. Die Kennlinie stellt für den zugelassenen Temperaturbereich des Rotationslasers 10 von -20 °C bis + 50 °C einen Zusammenhang zwischen der Temperatur T des Neigungssensors 60 und der Blasenlänge L der Gasblase 62 her. Die Blasenlänge L der Gasblase 62 verändert sich linear mit der Temperatur T des Neigungssensors 60, wobei die Blasenlänge L mit sinkender Temperatur T abnimmt.

Die Genauigkeit bei der Temperaturmessung kann erhöht werden, wenn für jeden Neigungssensor 43, 44, 45 der Nivelliereinrichtung 39 eine eigene Kennlinie, die die Temperatur des Neigungssensors abhängig von der Blasenlänge der Gasblase darstellt, bestimmt wird. Die Kontrolleinrichtung 51 des Rotationslasers 10 weist eine erste Kennlinie, die die erste Temperatur T₁ des ersten Neigungssensors 43 abhängig von der ersten Blasenlänge L₁ der ersten Gasblase 62-1 darstellt, eine zweite Kennlinie, die die zweite Temperatur T₂ des zweiten Neigungssensors 44 abhängig von der zweiten Blasenlänge L₂ der zweiten Gasblase 62-2 darstellt, und eine dritte Kennlinie, die die dritte Temperatur T₃ des dritten Neigungssensors 45 abhängig von der dritten Blasenlänge L₃ der dritten Gasblase 62-3 darstellt, auf.

## Patentansprüche

1. Verfahren zum Messen einer Betriebstemperatur einer Apparatur (10), die mittels einer Nivelliereinrichtung (39) in einen definierten Zustand ausrichtbar ist, wobei die Nivelliereinrichtung (39) mindestens einen Neigungssensor (43, 44, 45; 60) mit einem Gehäuse (61), das mit einer Gasblase (62) und einer Flüssigkeit (63) gefüllt ist, einer Lichtquelle (64) und einem Fotodetektor (65) umfasst, mit den Schritten:
▪ Speichern einer Kennlinie von Temperaturen (T) der Apparatur (10) und Blasenlängen (L) der Gasblase (62) in einer Kontrolleinrichtung (51) der Apparatur (10),
▪ Messen der Blasenlänge (L) der Gasblase (62) und
▪ Ermitteln der zugehörigen Temperatur (T) zur gemessenen Blasenlänge (L) der Gasblase (62) anhand der Kennlinie.

2. Verfahren nach Anspruch 1, **dadurch gekennzeichnet, dass** die Blasenlänge (L) der Gasblase (62) mittels der Lichtquelle (64) und des Fotodetektors (65) des Neigungssensors (60) gemessen wird.

3. Apparatur (10) mit mindestens einer Geräteachse (36, 37, 38), die in einen definierten Zustand ausrichtbar ist, aufweisend:
▪ eine Kontrolleinrichtung (51) und
▪ mindestens einen Neigungssensor (43, 44, 45; 60) mit einem Gehäuse (61), das mit einer Gasblase (62) und einer Flüssigkeit (63) gefüllt ist, einer Lichtquelle (64) und einem Fotodetektor (65), wobei der Neigungssensor (43, 44, 45) mit der Geräteachse (36, 37, 38) verbunden ist und die Ausrichtung der Geräteachse (36, 37, 38) zum definierten Zustand misst,
**dadurch gekennzeichnet, dass** in der Kontrolleinrichtung (51) eine Kennlinie vorgesehen ist, die die Betriebstemperatur (T) der Apparatur (10) in Abhängigkeit von einer Blasenlänge (L) der Gasblase (62) des Neigungssensors (60) darstellt.

4. Apparatur nach Anspruch 3, **dadurch gekennzeichnet, dass** die Apparatur (10) eine erste und zweite Geräteachse (36, 37) aufweist, wobei die erste Geräteachse (36) mittels eines ersten Neigungssensors (43) in einen ersten definierten Zustand und die zweite Geräteachse (37) mittels eines zweiten Neigungssensors (44) in einen zweiten definierten Zustand ausrichtbar sind, und in der Kontrolleinrichtung (51) eine erste und zweite Kennlinie vorgesehen sind, wobei die erste Kennlinie eine erste Betriebstemperatur (T₁) der Apparatur (10) in Abhängigkeit von einer ersten Blasenlänge (L₁) einer ersten Gasblase (62-1) des ersten Neigungssensors (43) darstellt und die zweite Kennlinie eine zweite Betriebstemperatur (T₂) der Apparatur (10) in Abhängigkeit von einer zweiten Blasenlänge (L₂) einer zweiten Gasblase (62-2) des zweiten Neigungssensors (44) darstellt.

5. Apparatur nach Anspruch 4, **dadurch gekennzeichnet, dass** die Apparatur (10) eine dritte Geräteachse (38) aufweist, wobei die dritte Geräteachse (38) mittels eines dritten Neigungssensors (45) in einen dritten definierten Zustand ausrichtbar ist, und in der Kontrolleinrichtung (51) eine dritte Kennlinie vorgesehen ist, wobei die dritte Kennlinie eine dritte Betriebstemperatur (T₃) der Apparatur (10) in Abhängigkeit von einer dritten Blasenlänge (L₃) einer dritten Gasblase (62-3) des dritten Neigungssensors (45) darstellt.
